# EUROPEAN PATENT APPLICATION

(11) **EP 3 929 942 A1**
(43) Date of publication of application: **29.12.2021**
(21) Application number: 21182011.3
(22) Date of filing: 28.06.2021
(51) Int. Cl.: G21C 3/60, G21G 1/00

(54) **NUCLEAR FUEL FOR ISOTOPE EXTRACTION**

(30) Priority: 26.06.2020 EP 20182530
(71) Applicant: SCK CEN, 1160 Brussels (BE); Institut National des Radioelements - I.R.E., 6220 Fleurus (BE)
(72) Inventor: CEA, Andrew Ken, Landen (BE); LEENAERS, Ann Josefine Georgette, Attenrode-Wever (BE); PARDOEN, Thomas, Mont-Saint-Guibert (BE); VAN DEN BERGHE, Sven, Verrebroek (BE); HOST, Valery Claude Lino G., Fleurus (BE); WYLOCK, Christophe, Goutroux (BE)
(74) Representative: DenK iP bv

(57) **Abstract**

A nuclear fuel, the nuclear fuel compriσing uranium aluminide grains, wherein the uranium aluminide grain properties are selected for good isotope extraction after irradiation and chemical digestion.

## Description

### Field of the invention

The present invention relates to the field of nuclear fuel. In particular the present invention relates to extraction and production of medical or industrial isotopes of uranium aluminide, and methods of designing and characterization of such a fuel.

### Background of the invention

Technetium-99m is the most commonly used medical radioisotope for medical diagnostic imaging. It is obtained by fission of highly enriched uranium targets and extracted after the fuel transforms into a yellow cake. Uranium aluminide alloys UAlₓ are commonly used as targets. Such alloys comprising mostly UAl₃ and UAl₄, with minor amounts of UAl₂. For example, WO2013/057533 discloses a method for producing such a cost-effective fuel comprising aluminium and low-enriched uranium. This method leads to an improved Technetium-99m extraction.

A maximum extraction of such a medical isotope from the nuclear fuel is desired.

### Summary of the invention

It is an object of the present invention to provide good nuclear fuels as well as good methods and systems for designing and characterising nuclear fuels and good methods and system for obtaining medical or nuclear isotopes.

It is an advantage of embodiments of the present invention that optimizing the design of the grains and the grain boundaries in the fuel for maximum extraction can be done by grain boundary engineering.

It is an advantage of embodiments of the present invention that use may be made of electron-backscatter diffraction for characterizing fuel by their grain boundaries, grain size and type of grain boundaries.

In one aspect, the present invention relates to a nuclear fuel, the nuclear fuel comprising uranium aluminide grains, wherein the uranium aluminide grain properties are selected for good isotope extraction after irradiation and chemical digestion. The uranium aluminide grains have a lower fraction of boundaries showing a decreased corrosion compared to the fraction of random boundaries.

The fraction of boundaries showing a decreased corrosion may be a fraction of one or more of ∑3ⁿ (n= 1, 2, 3) boundaries.

The uranium aluminide grains may comprise no ∑3 boundaries, or no ∑9 boundaries or no ∑27 boundaries or none of ∑3ⁿ (n= 1, 2, 3) boundaries.

It is an advantage of embodiments of the present invention that improved corrosion properties are obtained, resulting in a nuclear fuel with improved efficiency for generating isotopes.

It is an advantage of embodiments of the present invention that extraction of medical or industrial isotopes can be good or optimum for fission-based isotopes in uranium aluminide targets. It is an advantage of embodiment of the present invention that good conversion of the nuclear fuel from one state to its yellow cake state is obtained.

Where in embodiments of the present invention reference is made to a yellow cake, reference is made to any oxidized form of Uranium., also noted as U_{y}O_{z}. Yellow cake may for example comprise uranyl hydroxide and various forms of uranium oxides such as for example triuranium octoxide (U₃O₈), uranium dioxide (UO₂), uranium trioxide (UO₃). In some embodiments, the yellow cake may comprise NaUO₃, α-Na₃UO₄, α-Na₂UO₄, β-Na₂UO₄, Na₃UO₄, Na₄UO₅, or more generally NaₓU_{y}O_{z}, Advantageously, in embodiments according to the present invention, the yellow cake may be Na₂U₂O₇. The yellow cake more advantageously may comprise α-Na₂U₂O₇, β-Na₂U₂O₇.

The uranium aluminide grain properties may comprise one or more of grain boundary lengths within a predetermined range, number of triple junctions within a predetermined range and/or average grain size within a predetermined range.

One example of a predetermined range for grain boundary lengths may be between 45µm and 0.1µm, e.g. have an upper limit smaller than 45µm, e.g. smaller than 40µm, e.g. smaller than 10µm. The lower limit may for example be above 0.1µm, e.g. above 0.5µm. Alternatively, the lower limit may be defined by the detection limit of the EBSD technique.

In some embodiments, independent of the average grain size, the boundary length preferably is not exceeding 20µm. Advantageously, boundary lengths are below 20µm, more preferably below 10µm and may go downto 0.5µm or even smaller.

In some embodiments, the number of triple junctions in the grain boundary structure should be at least one within a radius of 20µm, more preferably at least one within a radius of 10µm, and even more preferably one or at least one within a radius of 0.5µm. The radius thereby may refer to a radius of any arbitrary circular area or may refer to a distance between any two triple junctions.

The uranium aluminide grains may be grains with high angle boundaries and grains with small sizes.

The uranium aluminide grains may belong to a grain network with a Feret diameter in the range 45µm and 0.1µm.

The nuclear fuel may comprise no UAl₂ particles or UAl₂ particles with a concentration smaller than 10%.

The nuclear fuel may comprise a predetermined distribution of UAl₂ particles in the nuclear fuel. For example, it is generally assumed that for reactor fuel, the molar ratios of the three aluminides in a typical reactor fuel UAl₂:UAl₃:U0.9Al₄ in the precipitates of U-AI alloys are 0.06:0.61:0.31. More generally the concentration of UAl₂ in these precipitates is below 10%, advantageously around 5%wt.

With respect to an advantageous distribution of the UAl₂, in order to have corrosion one needs to have a percolating pathway, or a maximum random boundary connectivity (MRBC). An UAl₂ particle forms an R1 type junction, where two boarders of a triple junction would be the equivalent to a low-Σ grain boundary. An UAl₂ particle forms an R2 type junction, where one boarder of a triple junction would be the equivalent to a low-Σ grain boundary. An UAl₂ particle forms an R3 type junction, where none of the boarders of a triple junction would be equivalent to a low-Σ grain boundary. In order to have a pathway in between two UAl₂ phases, advantageously there are at least two R2 or R3 type junctions or a combination thereof present between the UAl₂ phases.

The uranium aluminide grains may comprise UAl₃-UAl₄ alloys, wherein the UAl₃-UAl₄ alloys comprise UAl₃ grains and UAl₄ grains, wherein a plurality of UAl₃ grains form islands in a continuous UAl₄ grain matrix. It is an advantage of embodiments of the present invention that in UAl₃-UAl₄ alloys, the corrosion efficiency increases if UAl₃ grains form islands in a continuous UAl₄ grain matrix.

The UAl₃ grains may have a radius of or less than 6 µm.

The uranium aluminide grains may have soluble segregated grain boundaries.

Soluble segregated grain boundaries may comprise aluminum. Since it was found that corrosion time of uranium aluminide grains with well-developed grain boundaries is larger than for uranium aluminide grains with soluble segregated grain boundaries with e.g. an aluminum phase along the grain boundaries, it was advantageously found that fuels according to embodiments of the present invention allow for improved corrosion behaviour. The latter is caused by the corrosion efficiency of uranium aluminide grains with well-develop grain boundaries being smaller than the corrosion efficiency for uranium aluminide grains with soluble segregated grain boundaries with e.g. an aluminum phase along the grain boundaries. The nuclear fuel may be for extraction of medical or industrial isotopes. The nuclear fuel may be for the extraction of medical or industrial isotopes being any of Technetium-99 or Molybdenum-99 or Xenon-133 or Holmium-166 or Lutetium-177 or lodine-125 or lodine-131 or Iridium-192 or Strontium-89 or Yttrium-90.

The present invention also relates to the use of a nuclear fuel as described above for extraction of medical or industrial isotopes.

The medical or industrial isotopes may be any of Technetium-99 or Molybdenum-99 or Xenon-133 or Holmium-166 or Lutetium-177or lodine-125 or lodine-131or Iridium-192or Strontium-89 or Yttrium-90.

It is an advantage of embodiments of the present invention that medical or industrial isotopes, that have short half-lives, can quickly leave a fuel comprising fuel particles, and therefore can quickly be purified and can quickly be used e.g. can quickly be sent to hospitals. The present invention may for example especially advantageous for the production of Mo99 isotopes, used for example in different types of medical imaging, the production of Xenon-133, used for example in lung ventilation studies, the production of Holmium-166, used for example in therapy for liver tumors, the production of Lutetium-177, for example in therapy for neuroendocrine tumors, the production of lodine-125 and lodine-131, used for example in therapy of prostate cancer and thyroid, the production of Iridium-192, used for example in therapy of cervical, prostate, lung, breast cancer, the production of Strontium-89, used for example in pain management in bone cancer, the production of Yttrium-90, used for example in therapy of liver cancer.

The present invention also relates to a method of designing a nuclear fuel, the method comprising performing grain boundary engineering so as to obtain a nuclear fuel as described above.

The method may comprise increasing corrosion efficiency of a fuel particle.

The present invention also relates to a method of producing medical or industrial isotopes, the method comprising
- obtaining a nuclear fuel as described above,
- dispersing the nuclear fuel in a pure aluminum phase and encasing it in an aluminum cladding to form a target,
- irradiating the targets so as to form the isotopes, and
- chemically processing the irradiated targets to extract the isotopes.

The chemical processing may comprise adding sodium hydroxide to the targets. It is an advantage of embodiments of the present invention that the reaction of sodium hydroxide on the particles is auto-catalytic at 60°C. The chemical processing may comprise heating the mixture above a threshold temperature, e.g. above 60°C.

The method may comprise inducing a surface corrosion for the pure UAl₃ particles, followed by corrosion of triple junctions, followed by intergranular corrosion. It is an advantage of some embodiments of the present invention that in pure UAl₃ particles, the digesting chemical compound e.g. sodium hydroxide causes surface corrosion e.g. during the first 10 minutes. It is an advantage of embodiments of the present invention that surface corrosion happens up to a thickness of 6 µm. It is an advantage of embodiments of the present invention that in pure UAl₃ particles, the digesting chemical compound e.g. Sodium hydroxide causes corrosion of triple junctions e.g. between 10-30 minutes. It is an advantage of some embodiments of the present invention that corrosion of triple junctions happens to all triple junctions simultaneously. It is an advantage of some embodiments of the present invention that in pure UAl₃ particles, the digesting chemical compound e.g. sodium hydroxide causes intergranular corrosion e.g. after 30 minutes. It is an advantage of embodiments of the present invention that in intergranular corrosion, a percolating pathway is made through grain boundaries, before grain cores start to corrode.

The present invention also relates to a method for characterization of uranium aluminide alloy grains in nuclear fuel, the method comprising
obtaining an uranium aluminide alloy containing material,
applying electron backscatter diffraction to the uranium aluminide alloy containing material, and
deriving based thereon one or more grain boundary properties.

It is an advantage that electron backscattering, e.g. in contrast to X-ray diffraction, allows to obtain information and characterization of individual grain boundaries.

It is an advantage of embodiments of the present invention that electron backscatter diffraction (EBSD) is used for characterization of uranium aluminide grains in a fuel particle to find crystal orientation of uranium aluminide grains.

It is an advantage of embodiments of the present invention that electron backscatter diffraction (EBSD) is used for characterization of uranium aluminide grains in a fuel particle to find boundaries formed between grains e.g. between each grain and surrounding grains.

It is an advantage of embodiments of the present invention that EBSD is used for characterization of uranium aluminide grains in a fuel particle to identify types of grain boundaries.

It is an advantage of embodiments of the present invention that EBSD is used for characterization of uranium aluminide grains in a fuel particle to identify sizes of grains.

It is an advantage of embodiments of the present invention that EBSD is used for characterization of uranium aluminide grains in a fuel particle to match types of grain boundaries with corrosion performance.

It is an advantage of embodiments of the present invention that EBSD is used for optimization of corrosion of uranium aluminide grains in a fuel particle.

Deriving one or more grain boundary properties may comprise deriving a presence or position of one or more grain boundary, deriving one or more of a grain boundary type of a grain boundary and/or deriving a grain size of one or more grains.

The method furthermore may comprise deriving a corrosion behavior of the uranium aluminide alloy based on the one or more derived grain boundary properties.

The method furthermore may comprises matching types of grain boundaries with corrosion performance.

The method may comprise applying neighbor correction to the obtained electron backscattered diffraction data.

The method may comprise applying pixel dilation to the obtained electron backscattered diffraction data.

In one aspect, the present invention also relates to a method of examining uranium aluminide particles comprising pure UAl₂ particles, or pure UAl₃ particles, or UAl₂-UAl₃ alloys, wherein UAl₂-UAl₃ alloys comprise UAl₂ grains and UAl₃ grains, comprising pure UAl₄ particles, or UAl₃-UAl₄ alloys, wherein the examining comprises a reaction as a result of a mix of a digesting chemical compound with the uranium aluminide particles, wherein the reaction comprises a digestion process, wherein the digestion process is halted for different samples of the mix at different times. The method may comprise applying electron backscatter diffraction to the mix obtained at that moment, and deriving based thereon one or more grain boundary properties. Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter. The reference figures quoted below refer to the attached drawings.

### Brief description of the drawings

FIG. 1 to FIG. 4 illustrates grain boundary characteristics for controlling corrosion in nuclear fuels, as can be used in embodiments according to the present invention.
FIG. 5 illustrates a method for extracting isotopes from a nuclear fuel, according to an embodiment of the present invention.
FIG. 6 illustrates corrosion of a fuel particle, illustrating features of embodiments according to the present invention.
FIG. 7 illustrates a method for characterising an uranium aluminide alloy according to an embodiment of the present invention.
FIG. 8 to 10 illustrate features of electron backscattered diffraction characterization of nuclear fuel as can be used in embodiments according to the present invention.
FIG. 11 illustrates the effect of grain size on corrosion of UAl₃ particles, illustrating features of embodiments of the present invention.
FIG. 12 to FIG. 14 illustrate grain size analysis examples, illustrating features of embodiments of the present invention.

In the different figures, the same reference signs refer to the same or analogous elements.

### Description of illustrative embodiments

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second and the like, e.g. first direction and second direction, in the description and in the claims, are used for distinguishing between similar elements and not necessarily for describing a sequence, either temporally, spatially, in ranking, or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps.

Reference throughout this specification to "one embodiment" or "an embodiment" means that a particular feature, structure, or characteristic described in connection with the embodiment is included in at least one embodiment of the present invention. Furthermore, the particular features, structures, or characteristics may be combined in any suitable manner, as would be apparent to one of ordinary skill in the art from this disclosure, in one or more embodiments. In the description provided herein, numerous specific details are set forth. However, it is understood that embodiments of the invention may be practised without these specific details. In other instances, well-known methods, structures and techniques have not been shown in detail in order not to obscure an understanding of this description.

In a first aspect, embodiments of the present invention relate to a nuclear fuel comprising uranium aluminide. The uranium aluminide comprises uranium aluminide grains. The uranium aluminide grain properties are selected for good or optimum medical or industrial isotope extraction of a nuclear fuel target (comprising uranium aluminide target) after irradiation and chemical digestion. Further, the uranium aluminide grains properties may be selected for good conversion of the uranium aluminide target from one state to its yellow cake state. Further, the uranium aluminide grains properties may be selected to improve the corrosion efficiency of the uranium aluminide target.

The grain boundary properties may be selected so that there is a fraction of special boundaries being smaller than the random boundaries, wherein the special boundaries are boundaries showing decreased corrosion. The method thus may comprise reducing, or even avoiding, Σ3ⁿ (n= 1, 2, 3) boundaries. The method thus may comprise reducing, or even avoiding, Σ3, Σ9 and/or Σ27 boundaries.

Yellow cake may refer to any oxidized form of Uranium., also noted as U_{y}O_{z}. Yellow cake may for example comprise uranyl hydroxide and various forms of uranium oxides such as for example triuranium octoxide (U₃0₈), uranium dioxide (UO₂), uranium trioxide (UO₃). In some embodiments, the yellow cake may comprise NaUO₃, α-Na₃UO₄, α-Na₂UO₄, β-Na₂UO₄, Na₃UO₄, Na₄UO₅, or more generally NaₓU_{y}O_{z}, Advantageously, in embodiments according to the present invention, the yellow cake may be Na₂U₂O₇. The yellow cake more advantageously may comprise α-Na₂U₂O₇, β-Na₂U₂O₇.

In one particular example, the uranium aluminide target comprises UAl₃-UAl₄ alloys, with a concentration of, for example, 61% and 31%. The uranium aluminide target further comprises no UAl₂ particles, or UAl₂ particles with a concentration less than, for example, 6%, or less than 10%. The presence of UAl₂ particles prevents intergranular corrosion. Further, the presence of UAl₂ particles causes corrosion resistance also at the triple junctions and UAl₃-UAl₄ grain boundaries. In other words, UAl₂ grains protect a network of vulnerable sites surrounding it. In some embodiments, the nuclear fuel comprises a predetermined distribution of UAl₂ particles in the nuclear fuel. In some embodiments, the uranium aluminide grains comprise UAl₃-UAl₄ alloys, wherein the UAl₃-UAl₄ alloys comprise UAl₃ grains and UAl₄ grains, wherein a plurality of UAl₃ grains form islands in a continuous UAl₄ grain matrix.

In some embodiments, the uranium aluminide grains properties comprise one or more of average grain size within a first predetermined range, grain boundary lengths within a second predetermined range, and/or number of triple junction within a third predetermined range. These properties are chosen such that an improved corrosion efficiency of the uranium aluminide target can be achieved.

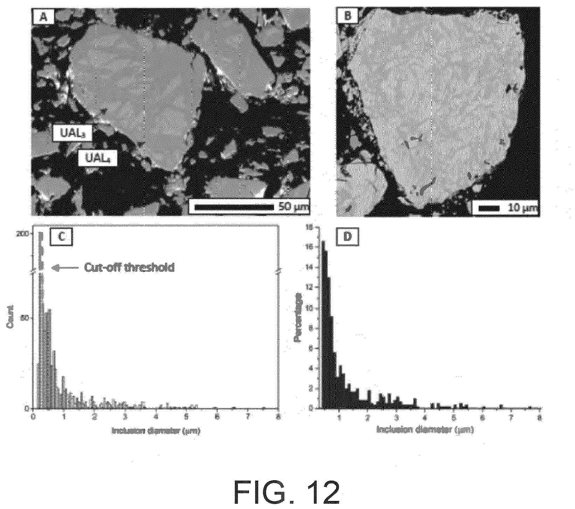

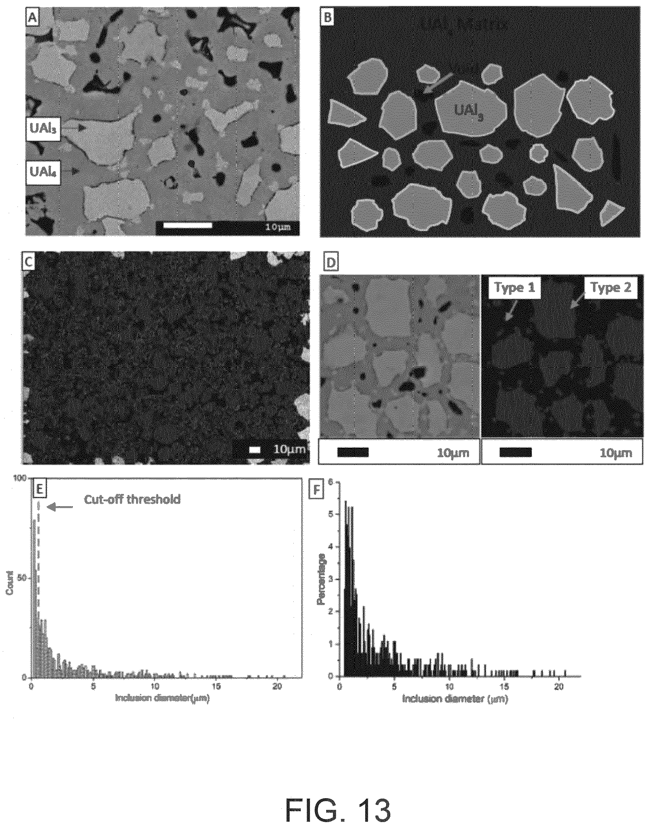

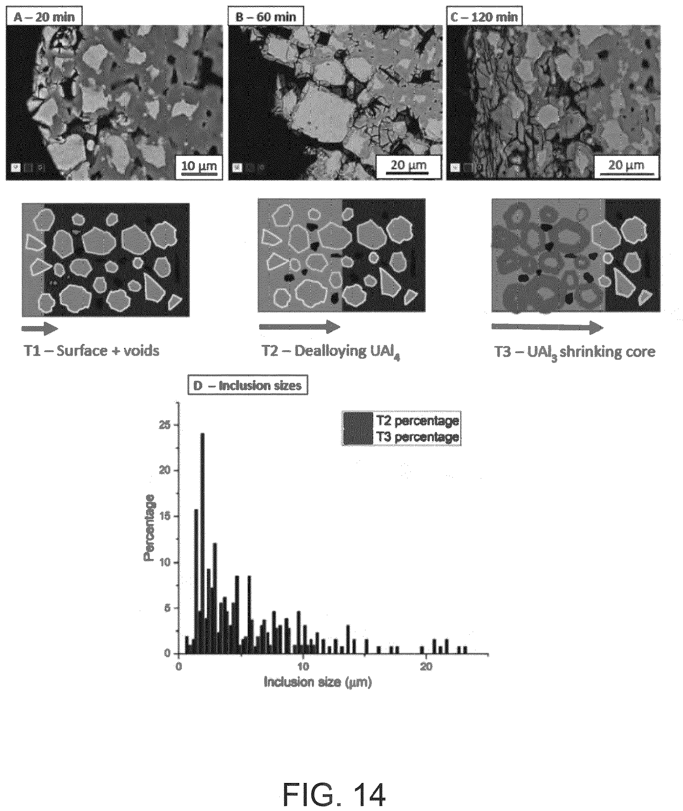

In some embodiments, the average grain size is within a first predetermined range between 0.5 µm and 40 µm, preferably closer to 0.5 µm. Further, the grain boundary length is within a second predetermined length range between 0.5 and 20 µm, preferably closer to 0.5 µm. In some embodiments, the uranium aluminide grains belong to a grain network with a Feret diameter in the range 45µm and 0.1µm. Regardless of the average grain size, if the grain boundary length exceeds 20 µm, corrosion becomes difficult. Further, in some embodiments, the number of triple junctions within a third predetermined radius range should be at least one triple junction within a radius of 20 µm, preferably one triple junction within a radius of 0.5 µm. The properties may further comprise the type of grain boundary. The uranium aluminide grains may further comprise grains with high angle boundaries. In some embodiments, the UAl₃ grains have a radius of or less than 6 µm. The latter is for example also illustrated in FIG. 12 to FIG. 14, whereby FIG. 12 illustrates an analysis of fuel in an HEU target. FIG. 12 part A and C illustrate BSE images of typical UAl₃-UAl₄ mixed particles found in a HEU target. FIG. 12 part B shows an EBSD image of the grain size and part D illustrates the grain size distribution. FIG. 12 part E illustrates raw data of inclusion sizes with cut-off threshold as suggested by Shannon's theorm. FIG. 12 part F illustrates UAl₃ inclusion diameter in percentages. FIG. 13 illustrates SEM images of an ingot and shows an inclusion size analysis based thereon. The sample has a continuous phase of UAl₄ With inclusions of UAl₃. FIG. 13 part A illustrates a BSE Image of the ingot with UAl₃ visible as lighter inclusions in a darker UAl₄ continuous phase. FIG. 13 part B illustrates a representation of the microstructure. FIG. 13 part C shows an image analysis demonstrating the thresholding to identify UAl₃ inclusions. FIG. 13 part D shows the raw data including the cut off limit. FIG. 13 part E shows the inclusion diameter as percentages in the ingot. FIG. 14 shows EDX images with its representations of digestion of mixed UAlₓ particles. The time of digestions are T1 = 20 minutes, T2 = 60 minutes and T3 = 120 minutes. Oxygen and aluminium are indicated inclusions sizes at T2 and T3 as a percentage of its frequency are shown in FIG. 14 part D. These images all illustrate the small grain size of UAl₃ grains.

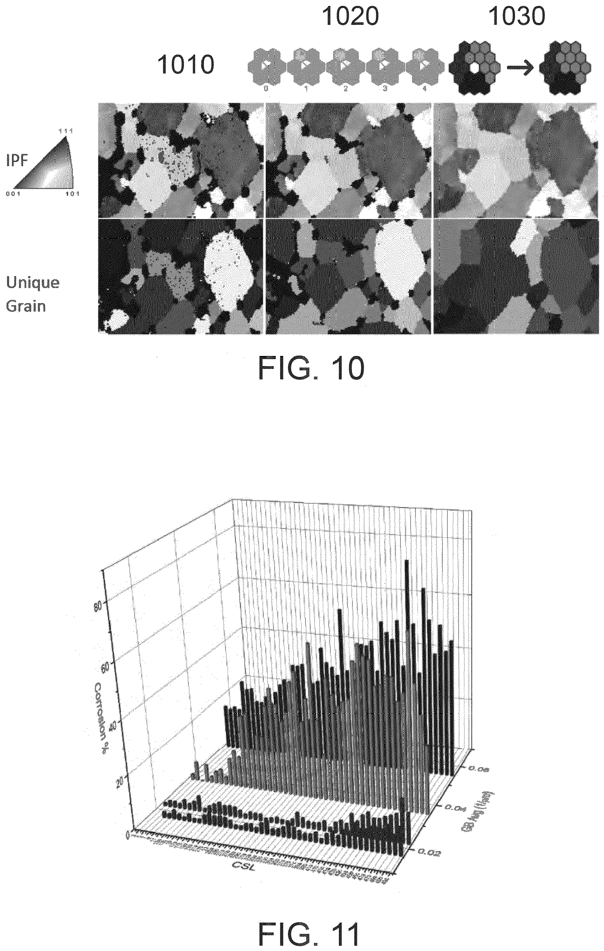

An illustration of the effect of the grain size on corrosion is also shown in FIG. 11 showing that smaller grain sizes assists in corrosion.

In some embodiments, the uranium aluminide may comprise UAl₃ grains and UAl4 grains, wherein a plurality of UAl₃ grains form islands in a continuous UAl₄ grain matrix. The UAl₃ grains may have a radius of or less than 6 µm. This improves the corrosion efficiency since a UAl₄ phase corrodes faster than a UAl₃ phase.

The uranium aluminide grains may further have soluble segregated grain boundaries. It was found that the corrosion time of uranium aluminide grains with well-developed grain boundaries is larger than uranium aluminide grains with soluble segregated grain boundaries. Further, the soluble segregated grain boundaries may comprise an aluminum phase along the grain boundaries.

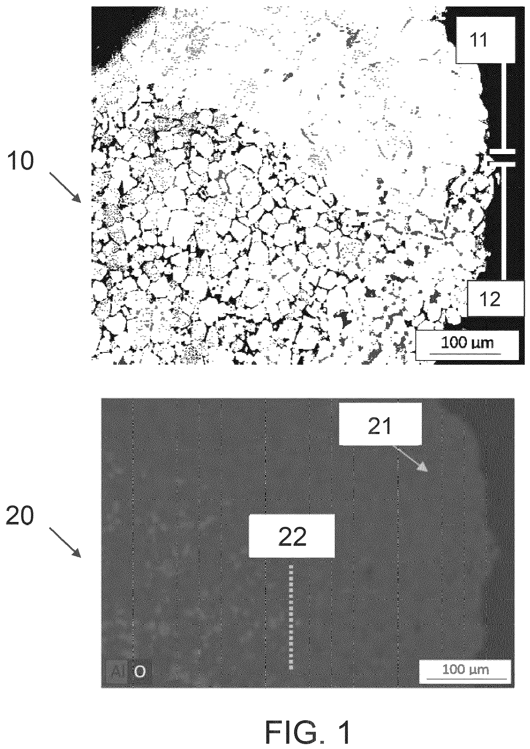

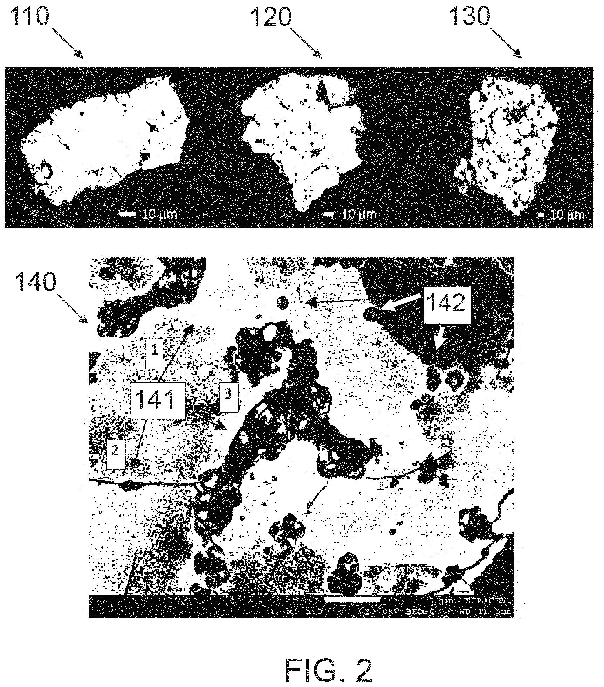

To illustrate the advantage of soluble segregated grain boundaries in terms of corrosion, FIG. 1 shows a digested fuel 10 particle for 15 minutes. The digested particle 10 has two fuel designs shown in a top and a bottom half of. The top half shows a design with well-developed grain boundaries 11, while the bottom half shows a design with grain boundary segregation with an aluminum phase along the boundary 12. The bottom half is shown to have more corrosion than the top part. The region of the particle with well-developed grain boundaries show that only surface corrosion 21 occurs, as shown in 20. In contrast, the region with solute segregated grain boundaries, with a corrosion front 22, has corroded to well over 100µm deep into the particle. Further by way of illustration, the corrosion process for pure UAl₃ fuel is illustrated in FIG. 2. In a pure UAl₃ fuel, corrosion happens in three stages: surface corrosion 110, followed by corrosion of triple junctions 120, and finally intergranular corrosion 130, as shown in FIG. 2. In the example given, sodium hydroxide causes surface corrosion during the first 10 minutes. For concentration of sodium hydroxide up to 8M and at 95°C, the surface corrosion had a thickness of 6 µm. Although there is a continuous development of the surface oxide, it is stifled after reaching this thickness as the surface states are passivated while no internal corrosion can be observed. Further, sodium hydroxide causes corrosion of triple junctions between 10-30 minutes. Corrosion of triple junctions happens to all triple junctions simultaneously, even deep inside a UAl₃ particle. Further, sodium hydroxide causes intergranular corrosion after 30 minutes, wherein a percolating pathway is made through grain boundaries, before grain cores start to corrode.

The development of stage three corrosion in particular shows many features of intergranular corrosion that alludes to a corrosion patterns observed in other metals such as steels, copper and iron alloys. 140 in FIG.1 shows that all particles that were undergoing stage three corrosion had boundaries that were corrosion resistant 141 (1), boundaries that were very susceptible to corrosion 141 (3), or somewhere in between 141 (2). As the particle in 140 is a pure UAl₃ particle, the corrosion resistant boundary isn't due to a phase boundary, where corrosion stops when meeting a corrosion resistant phase.

The implications of a three stage corrosion process alone allows for an optimization for digestible UAl₃ fuel particles. As corrosion at triple junctions and intergranular corrosion dominate the majority of the corrosion process, then grain boundary length, number of triple junctions, and average grain size would be more indicative of its digestibility.

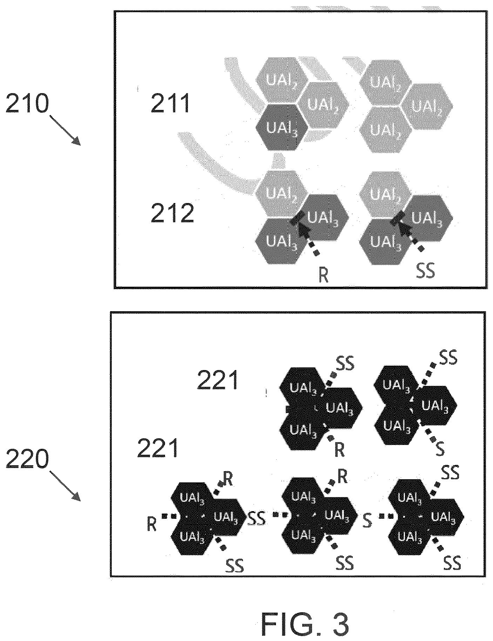

Considering the effects that phases and grain boundary sensitization have on corrosion resistance, two designs are chosen to demonstrate optimized fuel composition for both corrosion resistant and corrosion susceptible material. To conceive these designs, a classification system (FIG. 3), based on site percolation theory, where triple junctions are classified by their corrosion characteristics and their contribution to a percolating pathway, is used. The classification is in FIG. 3 can be split in two categories: 1) corrosion resistant design 210, and 2) corrosion susceptible design 220. The corrosion resistant design 210 is either an R0 protected type 211, or an R1 terminal type 212. The corrosion susceptible design 220 is either an R2 pathway type 221 or an R3 unobstructed type 222.

R0 protected type does not allow for corrosion at its triple junction or at the grain/phase boundaries that contribute to it. R0 type can have only Low-CSL boundaries or two or more UAl₂ phases.

R1 terminal type allows for its triple junction to be corroded. This type can have two random boundaries and one low CSL boundary, or one UAl₂ phase and two random boundaries.

R2 pathway type allows for its triple junction to be corroded as well as a corrosion pathway to pass through its junction. This type cannot have a UAl₂ phase. It can only have one boundary that is a low-CSL boundary, while the other boundaries must be either random or solute segregated boundaries.

R3 unobstructed type allows for its triple junction to be corroded as well as all its pathways to be corrosion susceptible.

In some embodiments, a corrosion resistant design 210 will contain only R0 type junctions 211 or R1 type junctions 212. Similarly, a corrosion susceptible design 220, which is a design that is optimal for the recovery of medical isotopes, will have R2 junctions 221 or R3 type junctions 222.

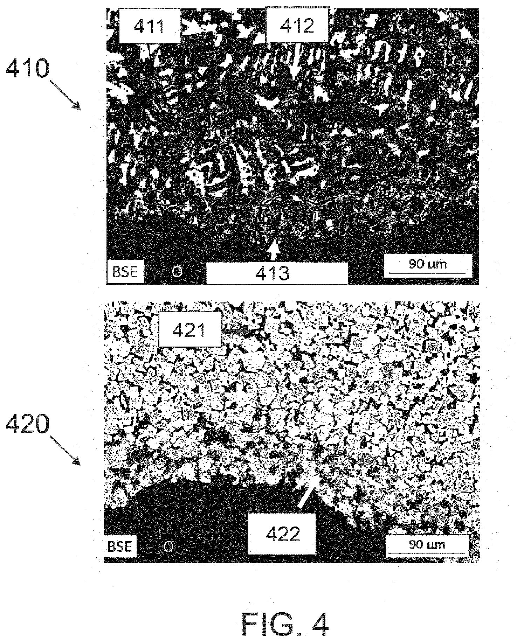

To demonstrate this principle, an UAl₂-UAl₃ alloy where the UAl₂ phase 411 is dispersed evenly within the UAl₃ phases 412 in a first particle 410, is compared with a UAl₃ fuel with solute segregated grain boundary 421 in a second particle 420. Both particles were digested for two hours in the same conditions, but demonstrate different corrosion properties. This is shown in FIG. 4. For example, the corrosion resistant design of the first particle 410 only has a surface oxidation layer 413. In other words, this particle is arrested in stage one digestion phase as surface oxidation passivates its surface, and corrosion at triple junctions are protected by R0 and R1 junction types.

The corrosion susceptible design 420 has corrosion well beyond a surface layer 422 with corroded grain boundaries up to 90µm.

The uranium aluminide may have a lower fraction of special boundaries with respect to random boundaries, wherein the presence of special boundaries are shown to decrease corrosion.

In a second aspect, embodiments of the present invention relate to use of a nuclear fuel for extraction of medical and industrial isotopes. The isotopes may be any of Technetium-99m or Mo-99. The medical isotopes may alternatively be Xenon-133, Holmium-166, Lutetium-177, lodine-125, iridium 192, strontium-89, or yttrium-90. According to embodiments of the present invention, the nuclear fuel used is a nuclear fuel as described in the first aspect.

In a third aspect, embodiments of the present invention relate to a method of designing a nuclear fuel, with an improved corrosion efficiency of the fuel particles. The method comprises performing grain boundary engineering so as to obtain a nuclear fuel according to embodiments of the first aspect of the present invention.

The method may comprise reducing the fraction of special boundaries with respect to random boundaries, wherein the presence of special boundaries is shown to decrease corrosion. The method thus may comprise reducing, or even avoiding, Σ3ⁿ (n= 1, 2, 3) boundaries. The method thus may comprise reducing, or even avoiding, Σ3, Σ9 and/or Σ27 boundaries or even a combination thereof.

Equally important as special grain boundaries are grain boundary triple junctions (GBTJ). Triple junctions composed entirely of three low-Σ Coincident site lattice (CSL) boundaries, or two low Σ CSL boundaries and a single random high-angle grain boundary. These boundaries usually also possess enhanced resistance to intergranular degradation.

The method may further comprise the addition of aluminum, carbides, iron, or zinc sensitize some alloys to corrode faster. This results in grain boundary segregation with an aluminum phase along the boundary. Since pure aluminum reacts rapidly and exothermically with sodium hydroxide, aluminum is chosen here.

The method may further comprise configuring, in UAl₃-UAl₄ alloys, the plurality of UAl₃ grains as islands in a continuous UAl₄ grain matrix.

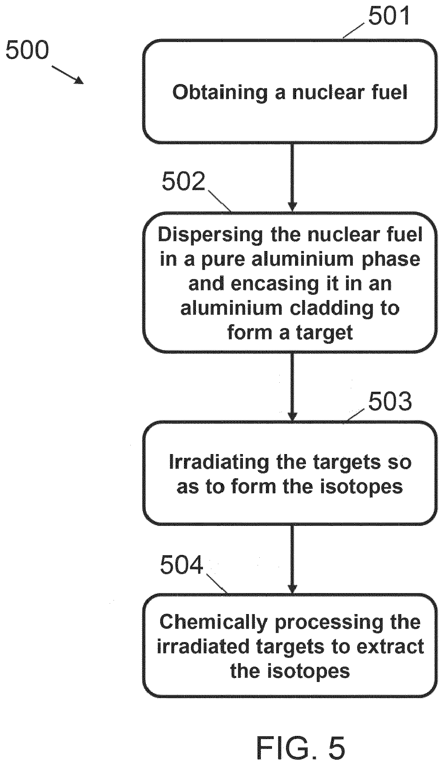

In a fourth aspect, embodiments of the present invention relate to a method of producing medical isotopes. By way of illustration, embodiments not being limited thereto, different standard and optional features will be shown with reference to FIG. 5. The method 500 comprises obtaining a nuclear fuel 501, e.g. a nuclear fuel as described in the first aspect, and dispersing the nuclear fuel in a pure aluminum phase and encasing it in an aluminum cladding to form a target 502. The method 500 further comprises irradiating the targets so as to form the isotopes 503, and chemically processing the irradiated targets to extract the isotopes 504. The chemical processing 504 may comprise adding a digesting chemical compound to the target. The digesting chemical compound may for example be sodium hydroxide. It is known that the reaction of sodium hydroxide is auto-catalytic at 60°C. Therefore, the chemical processing 504 may further comprise heating the mixture above a threshold temperature, e.g. above 60°C. the digestion is halted by plunging an aliquot sample into a 4°C ice bath. Additionally, the concentration of sodium hydroxide in the aliquot is depleted to below 1M NaOH on initial sampling, and further diluted within 10 minutes. This process has proved to satisfactorily arrest the corrosion of the fuel particle in one of the three stages.

The method 500 may further comprise inducing three different stages of corrosion in pure UAl₃ fuel.

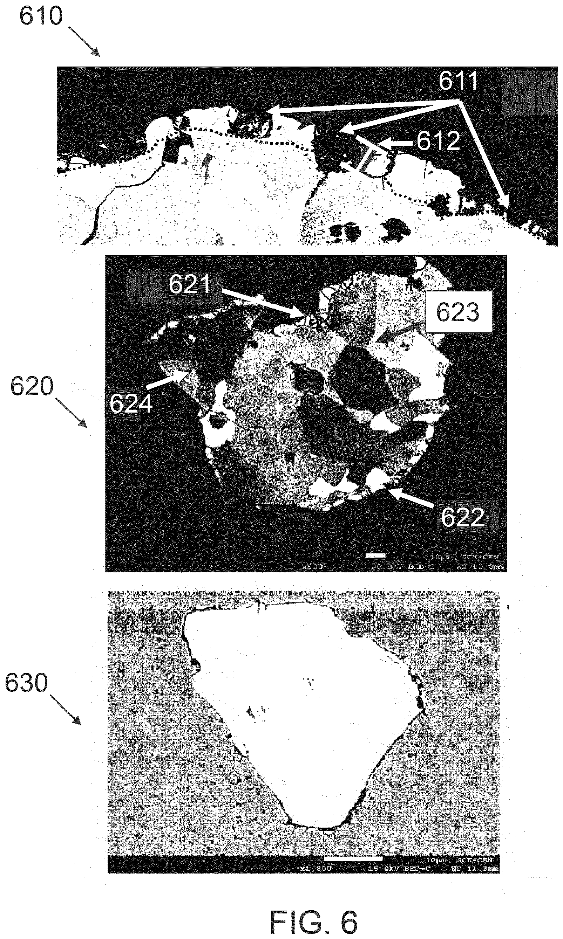

If UAl₂ is present, the corrosion of the fuel particle changes entirely. FIG. 6 shows an example of corrosion of fuel particles as an alloy of UAl₂-UAl₃ 610 at 120 minutes. The surface oxidation selectively corrodes UAl₃ 611 and has a surface corrosion depth 612. The corrosion layer stops when it reaches the UAl₂ phase, and does not grow appreciably on the surface of the UAl₂ phase that came in contact with a digestion solution. The mixed UAl₂-UAl₃ after 45 minutes of digestion 620 shows a limited corrosion 621 to the surfaces of UAl₃ phases exposed to the digestion solution, due to the presence of UAl₂ 622. The grain boundaries 623 and triple junctions 624 are shown.

Mixed fuel particles demonstrates corrosion resistance not just at the UAl₂ phase, but at the triple junctions 623 inside the particle and grain boundaries 623. Preserved grain boundaries 624 and triple junctions 623 are not limited to those that are touching a UAL₂ phase, but the UAl₂ phase protects a network of vulnerable sites surrounding it. If corrosion proceeded via a shrinking core or be radially dependent, then one would expect that the corrosion would work around the UAl₂ phase. But as intergranular corrosion is the dominant mode of digestion, then corrosion of mixed phase particles stops once the network of grain boundaries are protected by resistant phases. This indicates that not only is the UAL₂ fraction impactful on digestion characteristics of a fuel, but also its distribution within a particle.

A pure UAl₂ fuel particle 630 is almost unaffected by the digestion solution, even at high concentrations and for prolonged exposure.

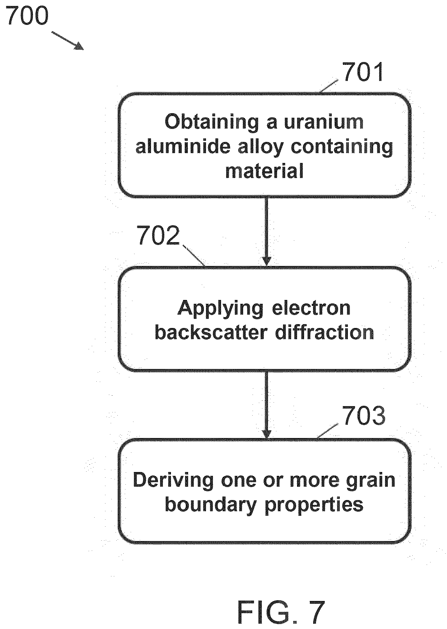

In a fifth aspect, embodiments of the present invention relate to a method 700 of characterization of uranium aluminide alloy grains in a nuclear fuel, as illustrated in FIG. 7. The method 700 comprises obtaining a uranium aluminide alloy containing material 701, and applying electron backscatter diffraction to the uranium aluminide alloy containing material 702.

The method 700 further comprises deriving based thereon one or more grain boundary properties. The properties may comprise a presence or a position of one or more grain boundary, crystal orientation of the grains, a grain size of one or more grains, boundaries formed between the grains e.g. between each grain and surrounding grains, and one or more of a grain boundary type of a grain boundary. Deriving 703 may further comprise deriving a presence or a position of one or more grain boundary.

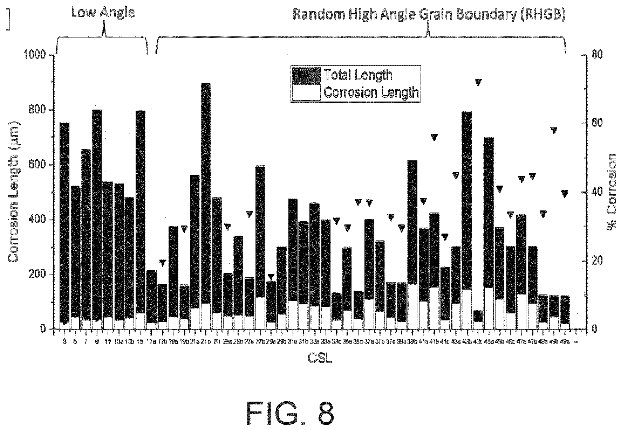

The method 700 may further comprise deriving a corrosion behavior of the uranium aluminide alloy based on the one or more derived grain boundary properties, and matching based thereon types of grain boundaries with corrosion performance, and optimization based thereon of corrosion of uranium aluminide grains. FIG. 8 shows an example of different grain boundaries versus respective corrosion performance i.e. corrosion percentage along each grain boundary. A random high angle grain boundary (RHGB) shows a higher corrosion performance (i.e. lower corrosion resistance) compared to a high angle grain boundary, and a high angle grain boundary shows a higher corrosion performance (i.e. lower corrosion resistance) compared to a low angle grain boundary.

FIG. 8 further shows the different grain boundaries versus the corrosion length and the total length of the grain boundary. A random high angle grain boundary (RHGB) shows a higher corrosion length compared to a high angle grain boundary, and a high angle grain boundary shows a higher corrosion length compared to a low angle grain boundary.

Further, the corrosion performance in a grain boundary in a grain is affected by the size of the grain. A grain with a Feret diameter of more than 40 µm corrode less efficiently (i.e. has a more corrosion resistance) than a grain with a Feret diameter of less than 40 µm. For example, a high angle boundary on a grain with a Feret diameter of more than 40 µm corrodes less efficiently than a high angle boundary on a grain with a Feret diameter of less than 40 µm. Similarly, a low angle grain with a Feret diameter of more than 40 µm corrodes less efficiently than a low angle grain with a Feret diameter of less than 40 µm.

Further, electron backscatter diffraction (EBSD) measurement is performed to match the grain boundary type in a sample with corrosion performance. For example, in FIG. 2, no information about the types of grain boundaries can be extracted. However, to investigate further the nature of these grain boundaries, Electron Backscatter Diffraction (EBSD) can be performed to match grain boundary type with corrosion performance.

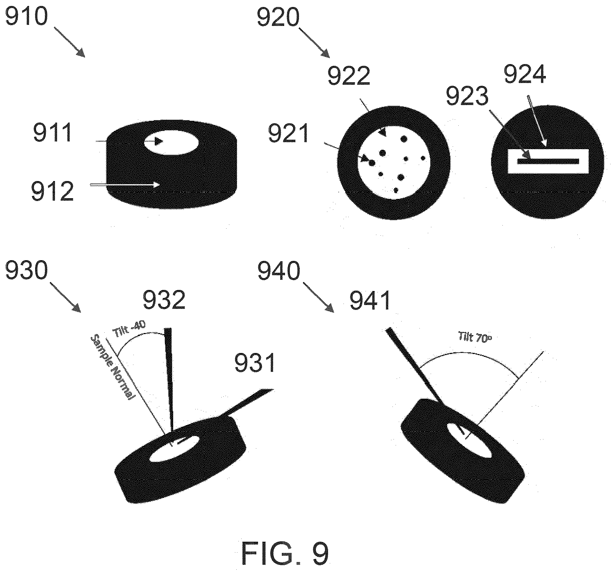

The sample is prepared similarly to the preparation of SEM or EDX measurements. Samples are either digested fuel particles without a target, or alternatively a whole target piece. An example of a measurement is shown in FIG. 9.

In case the sample is a digested fuel particle 921, the particle is first mixed with silver particles 922 in a 1%wt by volume mixture, as shown in a top-view 920. The particles are then compacted, for example with a pressure of 10 tons to make e.g. a small cylinder 911 with a diameter of for example 8.6 mm. The cylinder is then embedded into an epoxy resin 912, as shown in a side-view 910. Alternatively, in case the sample is a whole target piece 923, it is directly embedded into an epoxy resin to make a puck, as shown in the top-view 920. In the example, use is made of AI6061 being a precipitation-hardened alloy containing magnesium and silicon as its major alloying elements. Its composition by mass% is Al - 95.85-98.56, Mg - 0.8 - 1.2, Si - 0.4-0.8. Fe, Cu, Cr, Zn, Ti, and Mn are also included in minoring amounts. The puck is ground and polished with dry and wet methods. The puck is ground for example using SiC papers with grit sizes of for example 320 (35 µm), 600 (15 µm), 800 (13 µm), or 1200 (8 µm), expressed as grit size (average particle diameter). The duration of each of the grinding steps is for example 5 minutes. The puck is polished with a liquid diamond down to a 0.25 micron grade. For SEM quality images, 3 steps using a diamond particle suspension (3 µm, 1µm, 0.25 µm) is used. The sample is rinsed with water and cleaned with ethanol between polishing steps.

A focused ion-beam (FIB) may be used to further polish the sample surface in-situ in the vacuum chamber, to get good confidence indexing. Such polishing may be required in samples that oxidize quickly, such as for example metallic samples. For example, a Ga ion source is employed at an ion acceleration voltage of 20 kV to perform an additional in-situ polishing step using an incident ion-beam 931, as shown in 930. The sample is orientated in the vacuum chamber such that the ion beam would impinge on the surface at for example a 1° grazing angle. The working distance used is for example 10 mm. The EBSD measurement is then performed, as shown in 940, with an incident beam 941.

In the experiment, EBSD maps were recorded using an EDAX TEAM Pegasus system with a Hikari XP EBSD detector. A EDAX system is installed on a ThermoFischer SCIOS focused ion beam and scanning electron microscope (FIB/SEM) with a Schottky-type field emission gun (FEG). Spectra were recorded at 20kV with a beam current of 6.4nA. EBSD results were analyzed using the TSL OIM Analysis 8 software package. In the experiment, 4x4 or 8x8 pixels were binned for a 14 megapixel EBSD camera. A raster step size used during the EBSD measurements was 50 nm at a speed of around 100 patterns per second with a hexagonal raster pattern.

The method 700 may further comprise applying neighbor correction to the obtained electron backscattered diffraction data. This process is also referred to as "data clean up", and is necessary in order to evaluate the progress of corrosion in a sample, such as the sample 1010 in FIG. 10. This process is performed to fix areas that are missing due to corrosion, or have low confidence indexes e.g. lower than 0.1 due to being near a grain boundary or oxidation. For example, the oxidized surfaces and boundaries will have a different crystal structure, leaving their original crystal orientation ambiguous.

Data-cleanup comprises correction of a corroded boundary e.g. a corrosion hole, by association with its neighbor. This is referred to as neighbor orientation correlation 1020. There are a few conditions that must hold true before performing neighbor orientation correlation 1020. First, neighbor orientation correlation is only performed on data points with confidence index between e.g. between 0.1 and 0.2. Secondly, for such data points, the orientation should be checked to be different from immediate neighbors. A clean-up starts by testing the immediate neighbors and determine a level of difference, e.g. level 0 requires all nearest neighbors to be different, with a difference more than a tolerance angle, e.g. level 1 requires all except one nearest neighbors to be different, with a difference more than a tolerance angle, and similarly for level 3, 4, until level 5.

Thirdly, the number of neighbors which represent similar orientations within a given tolerance angle is tested, e.g. level 0 requires all nearest neighbors to be similar, with a difference more than a tolerance angle, e.g. level 1 requires all except one nearest neighbors to be similar, with a difference more than a tolerance angle, and similarly for level 3, 4, until level 5. If all of the previous hold true, the orientation of the data points with low confidence index is changed to one of the neighbors involved in meeting the second and third condition, at random. For a sample comprising multiple phases, a similar cleanup method is applied for phase correction.

The method 700 may further comprise applying pixel dilation 1030. This is an iterative correction method which acts on points that do not belong to any grain, but have neighboring points that are indexed. In this case, if the majority of neighboring points belong to the same grain, then the orientation of the point not belonging to any grain is changed to match the majority of surrounding neighboring points. Otherwise, the orientation of the point is matched to any of the neighboring points which belong to grains.. The method continues until all corroded boundaries are corrected, and grain boundary lengths are calculated based on the corrections.

## Claims

1. A nuclear fuel, the nuclear fuel comprising uranium aluminide grains, wherein the uranium aluminide grain properties are selected for good isotope extraction after irradiation and chemical digestion, the uranium aluminide grains having a lower fraction of boundaries showing a decreased corrosion compared to the fraction of random boundaries.

2. A nuclear fuel according to claim 1, wherein the fraction of boundaries showing a decreased corrosion are a fraction of one or more of Σ3ⁿ (n= 1, 2, 3) boundaries.

3. A nuclear fuel according to any of the previous claims, wherein the uranium aluminide grains comprise no Σ3 boundaries, or no Σ9 boundaries or no Σ27 boundaries or none of Σ3ⁿ (n= 1, 2, 3) boundaries.

4. A nuclear fuel according to any of the previous claims, wherein the uranium aluminide grain properties comprise one or more of grain boundary lengths within a predetermined range, number of triple junctions within a predetermined range and/or average grain size within a predetermined range.

5. A nuclear fuel according to any of the previous claims, wherein the uranium aluminide grains are grains with high angle boundaries and grains with small sizes and/or wherein the uranium aluminide grains belong to a grain network with a Feret diameter in the range 45µm and 0.1µm.

6. A nuclear fuel according to any of the previous claims, wherein the nuclear fuel comprises no UAl₂ particles or UAl₂ particles with a concentration smaller than 10% and/or wherein the nuclear fuel comprises a predetermined distribution of UAl₂ particles in the nuclear fuel.

7. A nuclear fuel according to any of the previous claims, wherein the uranium aluminide grains comprise UAl₃-UAl₄ alloys, wherein the UAl₃-UAl₄ alloys comprise UAl₃ grains and UAl₄ grains, wherein a plurality of UAl₃ grains form islands in a continuous UAl₄ grain matrix.

8. A nuclear fuel according to any of the previous claims, wherein the UAl₃ grains have a radius of or less than 6 µm and/or wherein the uranium aluminide grains have soluble segregated grain boundaries.

9. A nuclear fuel according to the previous claim, wherein soluble segregated grain boundaries comprise aluminum.

10. A nuclear fuel according to any of the previous claims for extraction of medical or industrial isotopes.

11. A nuclear fuel according to claim 10, wherein the medical or industrial isotopes are one of Technetium-99 or Molybdenum-99 or Xenon-133 or Holmium-166 or Lutetium-177 or lodine-125 or lodine-131 or Iridium-192 or Strontium-89 or Yttrium-90.

12. A method for characterization of uranium aluminide alloy grains in nuclear fuel, the method comprising
- obtaining an uranium aluminide alloy containing material
- applying electron backscatter diffraction to the uranium aluminide alloy containing material, and
- deriving based thereon one or more grain boundary properties.

13. The method according to claim 12, wherein deriving one or more grain boundary properties comprises deriving a presence or position of one or more grain boundary, deriving one or more of a grain boundary type of a grain boundary and/or deriving a grain size of one or more grains and/or wherein the method furthermore comprises deriving a corrosion behaviour of the uranium aluminide alloy based on the one or more derived grain boundary properties.

14. The method according to any of claims 12 to 13, wherein the method furthermore comprises matching types of grain boundaries with corrosion performance and/or wherein the method comprises applying neighbor correction to the obtained electron backscattered diffraction data.

15. The method according to any of claims 12 to 14, wherein the method comprises applying pixel dilation to the obtained electron backscattered diffraction data.
